# EUROPEAN PATENT APPLICATION

(11) **EP 4 793 751 A1**
(43) Date of publication of application: **19.08.2026**
(21) Application number: 24889893.4
(22) Date of filing: 11.01.2024
(51) Int. Cl.: G06F 3/16

(54) **DYNAMIC MULTI-STREAM IMPLEMENTATION METHOD AND SYSTEM, AND MEDIUM**

(30) Priority: 17.11.2023 CN 202311544276
(71) Applicant: Hansong (Nanjing) Technology Limited, Nanjing, Jiangsu 211106 (CN)
(72) Inventor: CHEN, Yang, Nanjing, Jiangsu 211106 (CN); YUAN, Fanjie, Nanjing, Jiangsu 211106 (CN); YAN, Jie, Nanjing, Jiangsu 211106 (CN); MA, Min, Nanjing, Jiangsu 211106 (CN)
(74) Representative: Dai, Simin
(86) International application number: PCT/CN2024/071825
(87) International publication number: WO 2025/102519

(57) **Abstract**

Provided is a method for implementing dynamic multi-streaming. The method includes: generating a grouping instruction based on a first user operation, the first user operation being related to a grouping requirement of a user; grouping audio devices in a target area based on the grouping instruction to obtain device grouping information; generating a playback instruction based on the device grouping information and a second user operation, the second user operation being related to a playback requirement of the user, and the playback requirement including a target audio source; and controlling a target device to play the target audio source based on the playback instruction.

## Description

### CROSS-REFERENCE TO RELATED APPLICATIONS

This application claims priority to Chinese Patent Application No. 202311544276.1, filed on November 17, 2023, the entire contents of each of which are incorporated herein by reference.

### TECHNICAL FIELD

The present disclosure relates to the field of audio playback technology, and in particular, to methods, systems, and media for implementing dynamic multi-streaming.

### BACKGROUND

When a user desires that audio devices in a designated area play one or more specific audio sources or video sources in a space where a plurality of audio devices are deployed (for example, a home space, a shopping mall, an exhibition center, a conference hall), traditional methods often do not support grouping the plurality of audio devices to play the audio sources or the video sources according to the audio device groups. The user can only operate a single audio device multiple times to meet playback requirements, which is relatively cumbersome. Moreover, the audio devices are usually named using addresses or some random symbols, which is not conducive to the user quickly selecting corresponding devices to play audio sources or video sources.

Therefore, it is necessary to provide a method for implementing dynamic multi-streaming, which can automatically and quickly fulfill users' playback requirements and improve the user experience.

### SUMMARY

One or more embodiments of the present disclosure provide a method for implementing dynamic multi-streaming. The method for implementing dynamic multi-streaming comprises: generating a grouping instruction based on a first user operation, wherein the first user operation is related to a grouping requirement of a user; grouping audio devices in a target area based on the grouping instruction to obtain device grouping information; generating a playback instruction based on the device grouping information and a second user operation, wherein the second user operation is related to a playback requirement of the user, and the playback requirement comprises a target audio source; and controlling at least one target device to play the target audio source based on the playback instruction.

One or more embodiments of the present disclosure provide a system for implementing dynamic multi-streaming, comprising: a grouping instruction generation module configured to generate a grouping instruction based on a first user operation, wherein the first user operation is related to a grouping requirement of a user; a grouping module configured to group audio devices in a target area based on the grouping instruction to obtain device grouping information; a playback instruction generation module configured to generate a playback instruction based on the device grouping information and a second user operation, wherein the second user operation is related to a playback requirement of the user, and the playback requirement comprises a target audio source; and a playback module configured to control at least one target device to play the target audio source based on the playback instruction.

One or more embodiments of the present disclosure provide a non-transitory computer-readable storage medium, wherein the storage medium stores computer instructions, and when a computer reads the computer instructions in the storage medium, the computer executes the method for implementing dynamic multi-streaming.

### BRIEF DESCRIPTION OF THE DRAWINGS

The present disclosure is further illustrated by way of exemplary embodiments, which is described in detail with reference to the accompanying drawings. These embodiments are not limiting, and in these embodiments, the same reference numerals denote the same structures, wherein:
FIG. 1 is a schematic diagram illustrating an exemplary application scenario of a system for implementing dynamic multi-streaming according to some embodiments of the present disclosure;
FIG. 2 is a block diagram illustrating an exemplary system for implementing dynamic multi-streaming according to some embodiments of the present disclosure;
FIG. 3 is a flowchart illustrating an exemplary process of a method for implementing dynamic multi-streaming according to some embodiments of the present disclosure;
FIG. 4 is a flowchart illustrating an exemplary process for determining device grouping information according to some embodiments of the present disclosure;
FIG. 5 is a flowchart illustrating an exemplary process for determining a candidate grouping scheme according to some embodiments of the present disclosure;
FIG. 6 is a flowchart illustrating an exemplary process for determining an estimated playback quality of a candidate grouping scheme according to some embodiments of the present disclosure;
FIG. 7 is a schematic diagram illustrating another exemplary process for determining an estimated playback quality of a candidate grouping scheme according to some embodiments of the present disclosure.

### DETAILED DESCRIPTION

To more clearly illustrate the technical solutions of the embodiments of the present disclosure, the accompanying drawings required for the description of the embodiments are briefly introduced below. Evidently, the figures in the following description are merely some examples or embodiments of the present disclosure, and for a person of ordinary skill in the art, without making inventive effort, the present disclosure can also be applied to other similar scenarios based on these figures. Unless clearly indicated by the context or otherwise specified, the same reference numerals in the figures represent the same structures or operations.

It should be understood that 'system', 'apparatus', 'unit', and/or 'module' as used herein is a manner for distinguishing different components, elements, parts, portions, or assemblies at different levels. However, if other terms can achieve the same purpose, the terms may be replaced by other expressions.

As shown in the present disclosure and the claims, unless the context clearly indicates otherwise, the terms 'a', 'an', and/or 'the' do not specifically refer to the singular and may also include the plural. Generally speaking, the terms 'comprising' and 'including' merely imply the inclusion of explicitly identified steps and elements, and these steps and elements do not constitute an exclusive enumeration, and a method or a device may also include other steps or elements.

A flowchart is used in the present disclosure to illustrate operations performed by the system according to embodiments of the present disclosure. It should be understood that the preceding or subsequent operations are not necessarily performed precisely in order. Instead, the steps may be processed in reverse order or simultaneously. Meanwhile, other operations may also be added to these processes, or one or more steps may be removed from these processes.

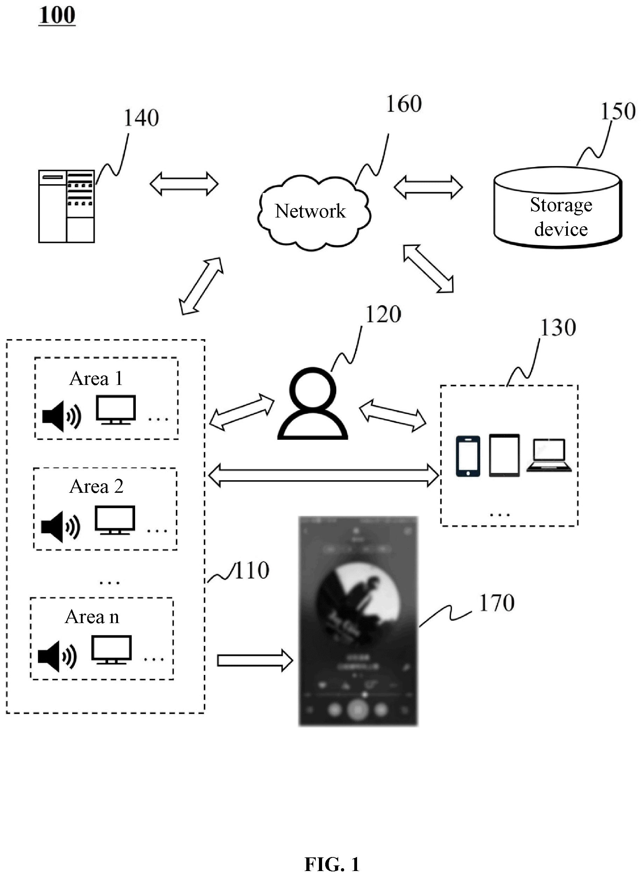

FIG. 1 is a schematic diagram illustrating an exemplary application scenario of a system for implementing dynamic multi-streaming according to some embodiments of the present disclosure.

As shown in FIG. 1, an application scenario 100 of the system for implementing dynamic multi-streaming may include audio devices 110 in various areas, a user 120, a user terminal 130, a processor 140, a storage device 150, a network 160, and a target audio source 170.

The audio devices 110 in various areas refer to devices installed in various areas (e.g., area 1, area 2, ..., area n) that have a function of playing audio sources. For example, the audio device may be a speaker, a music player (e.g., an iPad, an MPEG-1 Audio Layer 3 (MP3) player), or the like. In some embodiments, the audio device 110 may also have a video playback function, for example, the audio device may also be a television.

In some embodiments, the audio device 110 may have one or more speakers. The present disclosure does not limit the types of the audio devices. The audio device 110 can transmit basic information of the audio device 110 to the processor 140 via the network 160 for subsequent processing, and the basic information of the audio device 110 may include a Media Access Control (MAC) address, an account number, a device type, a device name, or the like. In some embodiments, the audio device 110 can also receive and execute an operation instruction issued by the processor 140. For example, the audio device 110 can receive the playback instruction issued by the processor 140 and perform playback based on the playback instruction.

The user 120 refers to a user using the audio devices. For example, in a home scenario, the user 120 may be a family member, or the like. For another example, in a commercial scenario, the user 120 may be a property management personnel, or the like. The user 120 can issue a user instruction through the user terminal 130. For example, the user 120 can perform operations through the user terminal 130, such as audio device grouping, selecting at least one audio device to play music, or the like. The user terminal 130 refers to one or more terminal devices or software used by the user 120. For example, the user terminal 130 may be a device having input and/or output functions, such as a mobile phone, a computer, or the like. In some embodiments, the user terminal 130 can obtain user input through a plurality of manners (e.g., voice or text).

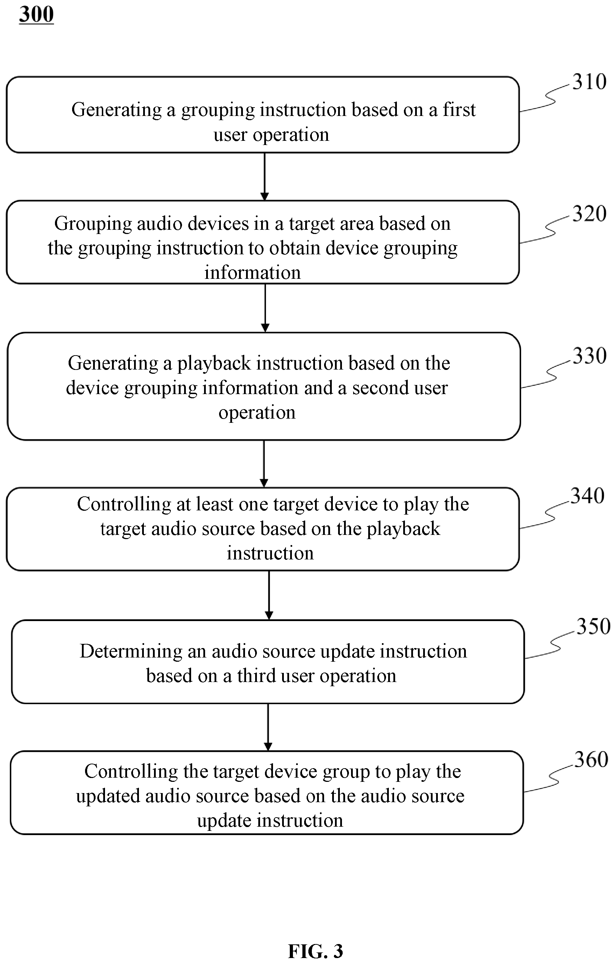

The user terminal 130 refers to a terminal device that provides an operation function and a display function, or the like, to interact with a user. In some embodiments, the user terminal 130 can obtain user instructions based on user input or other operations and transmit user instructions to the storage device 150 and/or the processor 140 for storage and/or subsequent processing. The user instructions may include a grouping instruction, a playback instruction, or the like. In some embodiments, the user instructions may also include a user operation instruction. For more content regarding the user operation instruction, please refer to the relevant description in S340 of FIG. 3.

In some embodiments, the user terminal 130 can also obtain streaming media group information issued by the processor 140 and process the streaming media group information to obtain full list information of the audio devices, and then display the full list information of the audio devices to the user 120 on an interactive interface of the user terminal 130. In some embodiments, the user terminal 130 can also directly obtain the full list information of the audio devices issued by the processor 140 and display the full list information to the user on the interactive interface.

The processor 140 can manage data resources, and process data and/or information from at least one component involved in the application scenario 100 or an external data source (e.g., a cloud data center). The processor 140 can execute program instructions based on the data, the information, and/or processing results, so as to perform one or more functions described in the present disclosure.

In some embodiments, the processor 140 can receive the grouping instruction transmitted by the user terminal 130 and generate device grouping information based on the grouping instruction, and then transmit the device grouping information to the user terminal 130. For more content, please refer to FIG. 3 and its related description. In some embodiments, the processor 140 can receive the playback instruction issued by the user terminal 130 and then transmit the playback instruction to the corresponding audio device 110. In some embodiments, the processor 140 can receive the user operation instruction issued by the user terminal 130 and automatically perform audio source pairing and playback based on the user operation instruction.

In some embodiments, the processor 140 may include one or more sub-processing devices (e.g., a single-core processing device or a multi-core multi-chip processing device). Merely by way of example, the processor 140 may include one or any combination of a Central Processing Unit (CPU), a Graphics Processing Unit (GPU), or the like.

The storage device 150 can store data and/or instructions. For example, the storage device 150 can store the user instructions transmitted by the user terminal 130 via the network 160. For example, the storage device 150 may also store one or more pieces of instruction data issued by the processor 140 to the user terminal 130 or the audio device 110. In some embodiments, the storage device 150 can also store data reported by the audio device 110, for example, the basic information reported by the audio device 110. In some embodiments, data communication can be performed between the storage device 150 and the processor 140 via the network 160, and the storage device 150 may also be a part of the processor 140.

In some embodiments, the storage device 150 may include Random Access Memory (RAM), Read Only Memory (ROM), mass storage, or the like, or any combination thereof.

In some embodiments, one or more components of the application scenario 100 can transmit data to other components of the application scenario 100 via the network 160. For example, the processor 140 can obtain information and/or data from the user terminal 130, the audio device 110, and the storage device 150 via the network 160, or can transmit the information and/or data to the user terminal 130 and the storage device 150 via the network 160. In some embodiments, one or more components of the application scenario 100 can also directly perform data communication.

In some embodiments, the target audio source 170 refers to an audio source that a user desires to play, for example, music, a recording, or the like. In some embodiments, one or more audio devices in each area may play the target audio source. For more description of the target audio source, please refer to the related description in FIG. 3.

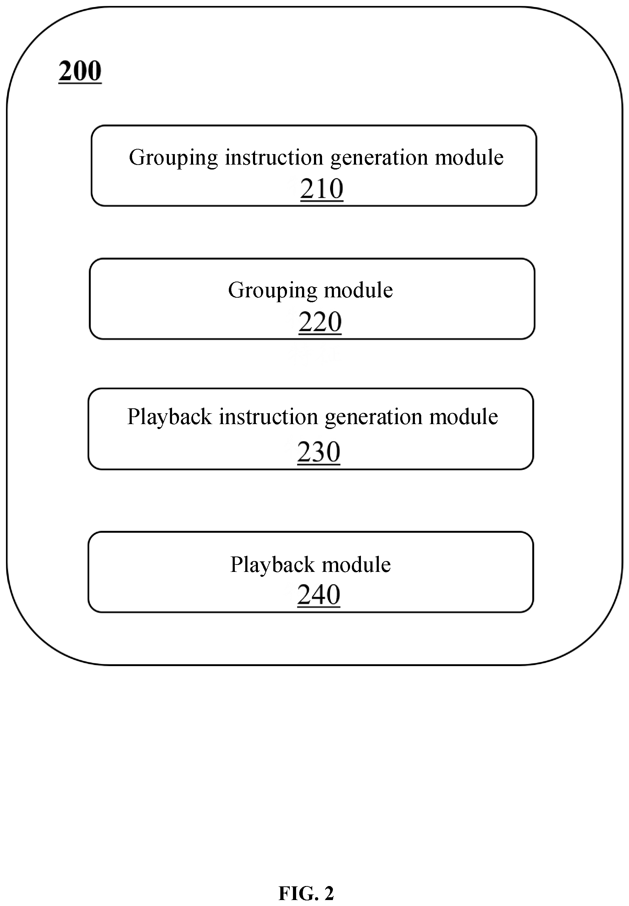

FIG. 2 is a block diagram illustrating an exemplary system for implementing dynamic multi-streaming according to some embodiments of the present disclosure.

In some embodiments, the system for implementing dynamic multi-streaming 200 may comprise a grouping instruction generation module 210, a grouping module 220, a playback instruction generation module 230, and a playback module 240. In some embodiments, the system for implementing dynamic multi-streaming 200 may be integrated into the processor 140.

In some embodiments, the grouping instruction generation module 210 is configured to generate a grouping instruction based on a first user operation, the first user operation being related to a grouping requirement of a user.

In some embodiments, the grouping module 220 is configured to group the audio devices in the target area based on the grouping instruction to obtain device grouping information.

In some embodiments, the grouping module 220 is further configured to group the audio devices in the target area based on the grouping instruction to obtain first grouping information and determine first streaming media group information based on the first grouping information. The grouping module 220 is further configured to acquire a first adjustment instruction from the user, the first adjustment instruction including update information of the first streaming media group information. The grouping module 220 is further configured to update the first streaming media group information based on the first adjustment instruction to obtain second streaming media group information. The grouping module 220 is further configured to determine the device grouping information based on the second streaming media group information.

In some embodiments, the grouping module 220 is further configured to generate full list information of the audio devices based on the first streaming media group information, display the full list information to the user, and determine the first adjustment instruction based on adjustment information of the user with respect to the full list information.

In some embodiments, the grouping requirement of the user comprises a content feature set and matching information corresponding to the content feature set, and the content feature set comprises one or more content features. The grouping module 220 is further configured to generate one or more candidate grouping schemes based on the grouping requirement of the user, each of the one or more candidate grouping schemes including at least one content feature and at least one audio device for playing the at least one content feature.

In some embodiments, for each of the one or more candidate grouping schemes, the grouping module 220 is further configured to determine an estimated playback quality of the one candidate grouping scheme based on historical playback information of the at least one audio device in the candidate grouping scheme.

In some embodiments, the grouping module 220 is further configured to determine a target grouping scheme based on the estimated playback qualities of the one or more candidate grouping schemes and determine the device grouping information based on the target grouping scheme.

In some embodiments, the matching information corresponding to the content feature set comprises a target playback area of each of the one or more content features and device requirement information corresponding to each of the one or more content features. In some embodiments, the grouping module 220 is further configured to determine a device quantity range of the at least one target device corresponding to the content feature set based on a quantity of the one or more content features in the content feature set and the device requirement information corresponding to each of the one or more content features. In some embodiments, the grouping module 220 is further configured to determine a to-be-enabled quantity of the at least one target device based on the device quantity range. In some embodiments, the grouping module 220 is further configured to determine one or more audio devices corresponding to the to-be-enabled quantity as one or more to-be-enabled audio devices. In some embodiments, the grouping module 220 is further configured to determine a first matching relationship that satisfies a preset matching condition based on the target playback area of each of the one or more content features, the first matching relationship including a correspondence between one or more content features and one or more to-be-enabled audio devices.

In some embodiments, the grouping module 220 is further configured to generate to-be-matched streaming media that satisfies a preset quantity requirement, the preset quantity requirement including that a quantity of the to-be-matched streaming media is not less than a quantity of the one or more content features in the content feature set. In some embodiments, the grouping module 220 is further configured to determine a correspondence between the to-be-matched streaming media and the one or more content features to obtain a second matching relationship and generate one or more streaming media groups. In some embodiments, the grouping module 220 is further configured to determine a correspondence between the to-be-matched streaming media and the streaming media groups to obtain a third matching relationship. In some embodiments, the grouping module 220 is further configured to obtain each of one or more candidate grouping schemes based on the first matching relationship, the second matching relationship, and the third matching relationship.

In some embodiments, the historical playback information of the at least one audio device comprises a signal transmission delay and a packet loss rate during historical playback. In some embodiments, the grouping module 220 is further configured to determine a signal transmission quality of the at least one audio device based on the signal transmission delay and the packet loss rate of the at least one audio device during the historical playback and determine the estimated playback quality of the candidate grouping scheme based on the signal transmission quality of the at least one audio device in the candidate grouping scheme.

In some embodiments, for each of the at least one audio device, the grouping module 220 is further configured to determine a plurality of sub-evaluation values of the audio device based on signal transmission delays and packet loss rates of the audio device during a plurality of times of historical playback and determine the signal transmission quality of the audio device based on a weighted summation of the plurality of sub-evaluation values.

In some embodiments, during the weighted summation of the plurality of sub-evaluation values, a weight of each sub-evaluation value is negatively correlated to a time interval between an occurrence time of the historical playback corresponding to the sub-evaluation value and a current time.

In some embodiments, the grouping module 220 is further configured to determine the estimated playback quality of the candidate grouping scheme through a quality prediction model based on the candidate grouping scheme, the signal transmission quality of the at least one audio device in the candidate grouping scheme, and first evaluation information of the at least one audio device, the quality prediction model being a machine learning model, and the first evaluation information including a plurality of signal transmission delays and a plurality of packet loss rates of each of the at least one audio device at a plurality of time points within a preset time period.

In some embodiments, the playback instruction generation module 230 is configured to generate a playback instruction based on the device grouping information and a second user operation, the second user operation being related to a playback requirement of the user, and the playback requirement including a target audio source.

In some embodiments, the playback module 240 is configured to control at least one target device to play the target audio source based on the playback instruction.

In some embodiments, each target device corresponds to a dedicated channel audio signal for playback.

In some embodiments, the target audio source comprises a mixed audio source obtained by mixing audio sources of at least two streaming media types.

In some embodiments, the system for implementing dynamic multi-streaming 200 further comprises an instruction update module; the instruction update module is configured to determine an audio source update instruction based on a third user operation, the third user operation being related to a playback update requirement of the user, and the playback update requirement including a target device group and an updated audio source for the target device group; and the playback module 240 is further configured to control the target device group to play the updated audio source based on the audio source update instruction.

In some embodiments, the playback module 240 is further configured to determine a user operation instruction based on at least one of the first user operation or the second user operation, the user operation instruction including the target audio source and the target playback area; and determine the at least one target device by performing audio source pairing based on the user operation instruction.

In some embodiments, the playback module 240 is further configured to pair the target audio source with at least one target transmission channel; pair the at least one target transmission channel with at least one target reception channel of the target playback area; and determine the at least one target device based on the at least one target reception channel.

It should be noted that the above description of the system for implementing dynamic multi-streaming and its modules is merely for convenience of description and does not limit the present disclosure to the scope of the illustrated embodiments. It can be understood that, for those skilled in the art, after understanding the principles of the system, they can arbitrarily combine the modules, or form a subsystem to connect with other modules without departing from the principles. In some embodiments, the grouping instruction generation module 210, the grouping module 220, the playback instruction generation module 230, and the playback module 240 disclosed in FIG. 1 may be different modules in a single system, or integrated into a single module that can implement the functions of two or more of the above-described modules. For example, the modules may share a storage module, and each of the modules may also respectively have its own storage module. Such variations are all within the protection scope of the present disclosure.

FIG. 3 is a flowchart illustrating an exemplary process of a method for implementing dynamic multi-streaming according to some embodiments of the present disclosure. In some embodiments, the process 300 may be executed by the processor 140 or the system for implementing dynamic multi-streaming 200. As shown in FIG. 3, the process 300 comprises the following operations S310-360.

S310, generating a grouping instruction based on a first user operation.

The first user operation refers to a physical operation performed by a user on a user terminal, which is related to grouping of audio devices. For example, the first user operation may be an operation of a user inputting a grouping requirement on the user terminal via various input windows of an application, a mini-program, a web page, or the like on the terminal device in various manners (including but not limited to text, voice, a touch screen, or the like).

In some embodiments, the processor may obtain a first user operation through a terminal device of a user. In some embodiments, the first user operation is related to a grouping requirement of a user.

The grouping requirement refers to a grouping condition of audio devices in a target area expected by a user.

In some embodiments, the grouping requirement may include a quantity of groups in the target area and the audio devices included in each group.

The target area refers to an entire or partial spatial area deployed with audio devices. For example, if the audio devices are deployed in a residential premises, the target area may be an entire spatial area where a user resides, or a portion of rooms thereof, or the like. For example, if the audio devices are deployed in a commercial premises, the target area may be the entire shopping mall or a portion of floors thereof, or the like. In some embodiments, positions of the audio devices in the target area may be fixed or movable.

In some embodiments, the processor may divide the target area into one or more sub-areas, so that the user may select the audio devices in the corresponding sub-area for playback. For example, when the target area is the entire spatial area where the user resides, the sub-areas may include bedrooms, living rooms, restrooms, balconies, kitchens, or the like. For example, when the target area is the entire shopping mall, sub-areas may include individual stores, restrooms, rest areas in the shopping mall, or the like.

In some embodiments, a sub-area may include one or more audio devices.

By way of example, assume that the target area has a total of 10 audio devices (denoted as audio devices 1 to 10), the entire target area (taking a residential scenario as an example) is divided into 3 sub-areas (a bedroom area, a living room area, and a bathroom area), the bedroom area is deployed with audio devices 1 to 2, the living room area is deployed with audio devices 3 to 8, and the bathroom area is deployed with audio devices 9 to 10.

In some embodiments, the sub-areas of the target area and the groups of the audio devices may be in one-to-one correspondence. For example, the user may take audio devices 1 to 2 deployed in the bedroom area as a group A, audio devices 3 to 8 deployed in the living room area as a group B, and audio devices 9 to 10 deployed in the bathroom area as a group C.

In some embodiments, the sub-areas of the target area and the groups of the audio devices may be a one-to-many relationship. For example, the living room area is deployed with audio devices 3 to 8, and the user may divide audio devices 3 to 8 into a plurality of groups, such as, taking audio devices 3 to 4 as a group B1, and audio devices 5 to 8 as a group B2.

In some embodiments, the sub-areas of the target area and the groups of the audio devices may be a many-to-one relationship. For example, the user may respectively select at least one audio device from at least two sub-areas to combine to obtain at least one group. Continuing with the previous example, the user may take audio device 1 in the bedroom area and audio device 3 in the living room area as a group D.

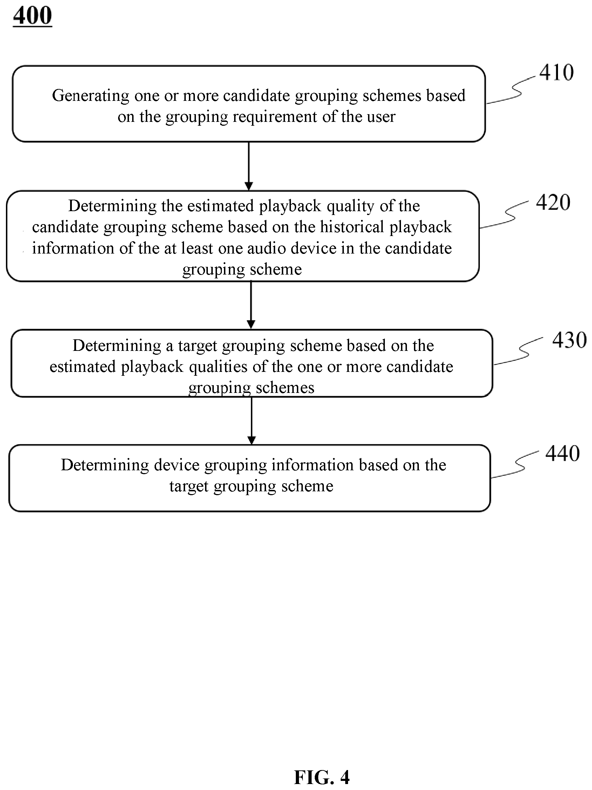

In some embodiments, the grouping requirement may further include other information related to the grouping of the audio devices. For more description, refer to corresponding content of FIG. 4.

In some embodiments, the grouping requirement may be determined based on a specific audio playback requirement of the user and/or a spatial layout of the target area, and the specific audio playback requirement of the user may be determined based on the first user operation. For example, assume that the target area has a total of 10 audio devices (denoted as audio devices 1 to 10), and the target area includes a bedroom, a living room, and a kitchen. If the audio playback requirement of the user is that at least three audio devices in the living room play 'Dao Xiang' and at least two audio devices in the bedroom play 'Ye Qu', then the grouping requirement may be to divide the audio devices into three groups based on the playback requirement and/or the spatial layout of the target area. A first group includes audio device 1 and audio device 2 in the bedroom, a second group includes audio devices 3 to 8 in the living room, and a third group includes audio devices 9 to 10 in the kitchen.

The grouping instruction refers to an instruction used for grouping all audio devices in the target area.

In some embodiments, the processor may generate the grouping instruction based on the grouping requirement determined by the first user operation. For example, the processor may generate the corresponding grouping instruction based on the quantity of groups and the audio devices included in each group required in the grouping requirement.

S320, grouping the audio devices in the target area based on the grouping instruction to obtain device grouping information.

For description about the audio devices, refer to the related description in FIG. 1.

The device grouping information refers to information related to selectable audio device groups finally displayed to the user. For example, the device grouping information may be the aforementioned three groups of audio devices, the first group includes audio device 1 and audio device 2 in the bedroom, the second group includes audio devices 3 to 8 in the living room, and the third group includes audio devices 9 to 10 in the kitchen.

In some embodiments, the process may obtain the device grouping information by grouping the audio devices in the target area based on the grouping instruction, including following operations.

S10, grouping the audio devices in the target area based on the grouping instruction to obtain first grouping information.

The first grouping information refers to information related to the grouping of the audio devices in the target area. For example, the first grouping information may include the quantity of groups of the audio devices in the target area, group names of the audio devices, and a streaming media type supported by each group of audio devices. The streaming media type may include Airplay2, Spotify, Roon, Digital Living Network Alliance (DLNA), Airable, or the like.

In some embodiments, the processor may obtain the first grouping information corresponding to one or more groups of audio devices by grouping the audio devices in the target area based on the grouping instruction.

S20, determining the first streaming media group information based on the first grouping information.

The first streaming media group information refers to the streaming media group information corresponding to the first grouping information.

The streaming media group information refers to information related to playback of audio sources by a plurality of audio device in groups. For example, the streaming media group information may include the basic information of the audio devices included in each audio device group, or the like.

In some embodiments, the streaming media group information includes one or more sets of streaming media information. The set of streaming media information refers to information related to playback of audio sources by a single audio device in groups. For example, the set of streaming media information may include a group name of an audio device group and basic information of one or more audio devices in a corresponding group, or the like.

A set of streaming media information corresponds to an audio device group. For example, by dividing all audio devices in the target area into four groups (denoted as audio device groups 1 to 4), each audio device group generates a corresponding set of streaming media information, then, a total of four sets of streaming media information are generated (denoted as the streaming media information set 1 to the streaming media information set 4).

In some embodiments, each set of streaming media information includes one or more pieces of sub-information. Each piece of sub-information corresponds to a target streaming media type.

The streaming media type may include Airplay2, Spotify, Roon, DLNA, Airable, or the like. The target streaming media type refers to a union of streaming media types supported by all audio devices in the audio device group corresponding to the set of streaming media information.

In some embodiments, the streaming media types supported by a same audio device group may be the same. For example, the audio device group 1 includes audio devices 1 to 3, the audio devices 1 to 3 all support the five streaming media types (airplay2, spotify, roon, DLNA, airable), then, the target streaming media type includes the five streaming media types (airplay2, spotify, roon, DLNA, airable). Then, the streaming media information set (i.e., the streaming media information set 1) includes the five pieces of sub-information, respectively corresponding to the five streaming media types in the target streaming media type.

In some embodiments, the streaming media types supported by the same audio device group may be different, then the target streaming media type is a union of the streaming media types supported by each audio device in the audio device group. For example, the streaming media information set 1 includes audio devices 1 to 3, audio device 1 supports airplay2 and spotify, audio device 2 supports spotify and roon, and audio device 3 supports airable, then the target streaming media type includes airplay2, spotify, roon, and airable. Then, the streaming media information set comprises the four pieces of sub-information, respectively corresponding to the four streaming media types in the target streaming media type.

In some embodiments, the content in each piece of sub-information may include the supported target streaming media types, the basic information of one or more audio devices in a corresponding group, or the like. In some embodiments, the basic information of audio devices may include a MAC address, an account, a device type, a device name, or the like. The device name of the audio device may include a name of a sub-area where the audio device is located. For example, the device name of the audio device may be 'Audio device 1 - Group A - Bedroom'. In some embodiments, the content in each piece of sub-information may further include programs corresponding to one or more services (e.g., device discovery, encoding, decoding, etc.) required for audio devices to play audio sources.

In some embodiments, each piece of sub-information in the streaming media group information corresponds to a complete function, and the complete function may include a plurality of sub-functions. In some embodiments, the complete function may be divided into the device function and the audio playback function of the audio device. The processor may call a program corresponding to a sub-function required for currently playing the target audio source from the storage device 150 and execute the program based on a playback status of the target audio source.

Exemplary, assuming that the streaming media group information includes four sets of streaming media information (corresponding to the four audio device groups), and each set of streaming media information includes the five pieces of sub-information (corresponding to the five streaming media types), the required running space for executing the device functions (e.g., discovery function, connection function, etc.) and audio playback functions of the audio devices corresponding to each piece of sub-information is 100 MB, then the required running space for directly executing all the device functions and audio playback functions of the audio devices corresponding to the 20 pieces of sub-information is 2000 MB.

In some embodiments of the present disclosure, the operation of the device function and the audio playback function of the audio device corresponding to each piece of sub-information is divided into the two stages. For example, the first stage is the execution of the device function of the audio device (e.g., discovery function and connection function), and the second stage is the execution of the audio playback function after the audio device is connected. If a running space required for the first-stage function of the audio device is 10 MB, and a running space required for the second-stage function is 90 MB, when all the audio devices are running, each audio device first runs the first-stage function (requiring a total running space of 20 * 10 = 200 MB). Then, after determining which audio devices need to be connected and establishing the connections, only the second-stage function of the audio devices (for example, five audio devices) that need to be connected is executed (requiring a total running space of 5 * 90 = 450 MB), thereby saving running space (i.e., the second-stage function is not executed for unused audio devices).

In some embodiments of the present disclosure, during the playback of the target audio source, the operation of the device function and the audio playback function of the audio device is divided into the two stages. The device functions of all audio devices run in full paths, and the audio playback functions of the corresponding connected audio devices are started only when actual demand arrives, thereby implementing multi-streaming resource optimization and saving computing resources.

In some embodiments, the processor may determine the streaming media group information corresponding to each audio device group in the first grouping information based on the first grouping information, so as to obtain the first streaming media group information.

S30, obtaining a first adjustment instruction from a user.

The first adjustment instruction refers to an instruction used for adjusting the first streaming media group information.

In some embodiments, the first adjustment instruction comprises update information of the first streaming media group information.

The update information of the first streaming media group information refers to information for modifying, supplementing, or replacing the first streaming media group information.

In some embodiments, the user may perform operations such as dragging or sliding on the interactive interface of the terminal device to issue the first adjustment instruction, and the processor obtains the first adjustment instruction from the user through the terminal device.

In some embodiments, the processor may further generate the full list information of the audio devices based on the first streaming media group information, display the full list information to the user, and determine the first adjustment instruction based on the adjustment information of the user with respect to the full list information.

The full list information of the audio devices refers to related information of the audio devices displayed to the user for adjustment.

In some embodiments, the full list information comprises one or more pieces of sub-data, each piece of sub-data corresponds to a piece of sub-information in a set of streaming media information, and different sub-data in the full list information correspond to different sub-information in the streaming media group information.

In some embodiments, each piece of sub-data in the full list information may include a name of a corresponding audio device group and one supported target streaming media type. The name of the corresponding audio device group includes a name of a sub-area where the audio devices in the group are located. In some embodiments, if a plurality of audio devices in an audio device group are all located in the same sub-area (e.g., a living room area), then a name of the audio device group may be 'Group A - Living Room'. If the plurality of audio devices are located in different sub-areas (e.g., the living room area and a bedroom area), then the name of the audio device group may be 'Group A - Living Room and Bedroom'.

In some embodiments, the processor may generate the full list information of the audio devices based on the first streaming media group information.

In some embodiments, the processor may send the determined full list information of the audio devices to the user terminal, and then display the full list information to the user on the interactive interface of the user terminal.

The adjustment information of the full list information refers to the adjustment information for adjusting the first streaming media group information.

In some embodiments, the user may issue the adjustment information of the full list information by performing operations such as dragging or sliding for any set of the first streaming media group information on the interactive interface of the terminal device, and the processor obtains the adjustment information of the full list information through the terminal device.

In some embodiments, the processor may generate the first adjustment instruction based on the adjustment information of the user with respect to the full list information.

In some embodiments of the present disclosure, the full list information, which is convenient for the user to understand, is displayed to the user, then, the user can adjust the grouping by performing operations such as direct dragging on the interactive interface of the user terminal, thereby reducing operation difficulty and improving user experience.

S40, obtaining the second streaming media group information by updating the first streaming media group information based on the first adjustment instruction.

The second streaming media group information refers to the updated first streaming media group information.

In some embodiments, the processor may adjust the first streaming media group information based on the first adjustment instruction to obtain the updated first streaming media group information, which is used as the second streaming media group information.

S50, determining the device grouping information based on the second streaming media group information.

In some embodiments, the processor may determine one or more corresponding device groups based on the second streaming media group information, so as to determine one or more pieces of the device grouping information.

In some embodiments, the processor may further determine the device grouping information via other manners. For details, refer to the description in FIG. 4.

S330, generating a playback instruction based on the device grouping information and a second user operation.

The second user operation refers to a physical operation performed by a user on the user terminal, which is related to audio device playback. For example, the second user operation may be an operation of a user inputting a playback requirement on the user terminal via various manners (including but not limited to text, voice, touch screen, or the like).

In some embodiments, the processor may obtain the second user operation from the terminal device of the user. In some embodiments, the second user operation is related to the playback requirement of the user.

The playback requirement refers to a requirement of a user with respect to audio source playback. For example, the playback requirement comprises a playback time and duration, or the like.

In some embodiments, the playback requirement may further comprise the target audio source.

The target audio source refers to an audio source expected to be played by a user, such as music, recordings, or the like.

In some embodiments, the target audio source may further be a video source.

In some embodiments, the target audio source may be a single audio source of a streaming media type. For example, the target audio source may be an AirPlay 2 music track.

In some embodiments, the target audio source may also be the mixed audio source obtained by mixing audio sources of at least two streaming media types. For example, the target audio source may be music obtained by mixing an AirPlay 2 music track and a Spotify music track.

In some embodiments, the processor may directly mix audio sources of at least two streaming media types to obtain the mixed audio source and send the mixed audio source as the target audio source to the target device for playback.

The target device may be one or more audio devices that are to play audio source. For more descriptions of the target device, refer to S340.

If the target device comprises a plurality of audio devices, the plurality of audio devices start playing the target audio source at the same time point to realize simultaneous playback of the target audio source by the plurality of audio devices.

In some embodiments of the present disclosure, the processor mixes audio sources of at least two streaming media types to obtain the mixed audio source, then each audio device in the target device respectively receives the mixed audio source and plays the mixed audio source, which can ensure that the mixed audio source arrives at each audio device in the target device simultaneously, thereby ensuring the consistency of playback by the plurality of audio devices in the target device.

In some embodiments, each audio device in the target device may respectively mix the received audio sources of at least two streaming media types to obtain the mixed audio source and play the mixed audio source.

In some embodiments of the present disclosure, because the computing power of each audio device in the target device is consistent, the consistency of playback by the plurality of audio devices in the target device is ensured.

In some embodiments, when the target audio source comprises multi-channel audio signals, the playback requirement may also comprise audio signals of corresponding playback channels for each target device. For example, when the target audio source is a stereo audio source, the stereo audio source comprises left and right channels audio signals, and the playback requirement may be that a portion of the audio devices in the target device play the left channel audio signal and the remaining audio devices in the target device play the right channel audio signal.

Further, for example, when the target audio source is a surround stereo audio source, such as a 5.1-channel surround stereo audio source including six channels of audio signals, the playback requirement may be that specified audio devices in the target device play specified channels of audio signals.

In some embodiments of the present disclosure, by assigning audio signals of corresponding playback channels to each target device, different requirements of different users can be better satisfied, and user experience can be improved.

The playback instruction refers to an instruction used for controlling at least one target device to play the target audio source.

In some embodiments, the processor may determine the target audio source for playback based on the second user operation; determine a streaming media type corresponding to the target audio source for playback based on the target audio source; determine the target device for playback based on the streaming media type corresponding to the target audio source and the device grouping information; and determine the playback instruction based on the target audio source for playback and the target device for playback.

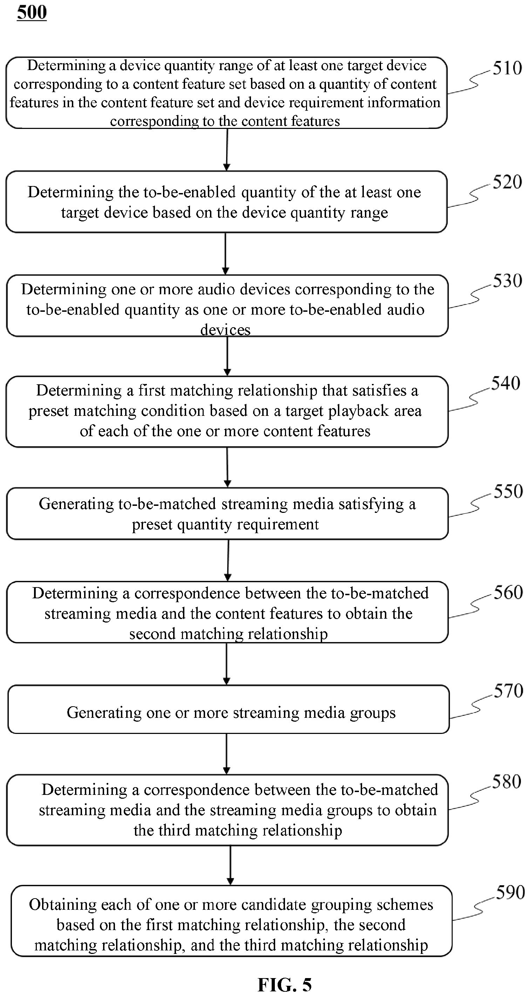

In some embodiments, the process for the processor to determine the streaming media type corresponding to the target audio source for playback is similar to the process for determining the media type of the to-be-matched streaming media in the target grouping scheme. For details, refer to the description of S590 in FIG. 5.

In some embodiments, the processor may select a matching audio device from the device grouping information based on the streaming media type corresponding to the target audio source and determine the matching audio device as the target device for playback.

S340, controlling at least one target device to play the target audio source based on the playback instruction.

In some embodiments, the target device may be one or more preset audio devices capable of supporting playback of the target audio source.

In some embodiments, the processor may determine the target device via a plurality of manners. In some embodiments, the target device may be a device specified by the user. For example, the target device may be all or a portion of the audio devices in a living room specified by the user.

In some embodiments, the target device may be determined based on the target grouping scheme and the playback requirement. For example, a corresponding quantity of audio devices (the audio devices capable of supporting playback of the target audio source) may be randomly determined within a corresponding group as the target device for playback. For more descriptions of the target grouping scheme, refer to corresponding description of FIG. 4.

In some embodiments, the processor may determine the user operation instruction based on at least one of the first user operation or the second user operation; and determine the at least one target device by performing audio source pairing based on the user operation instruction.

The user operation instruction refers to an operation instruction related to audio source playback, which is issued by the user on the user terminal.

In some embodiments, the user operation instruction may comprise the target audio source and the target playback area. For descriptions of the target playback area, refer to the description of S410 in FIG. 4.

In some embodiments, the processor may directly determine the user operation instruction based on at least one of the first user operation or the second user operation.

In some embodiments, the processor determines the at least one target device by performing audio source pairing based on the user operation instruction by a process including the following operations h10-h30.

h10, pairing the target audio source with at least one target transmission channel.

The target transmission channel refers to a transmission channel finally paired with the target audio source.

In some embodiments, the processor may obtain pairing information of all channels of a current transmission channel and a quantity of channels required by the target audio source, and then pair the target audio source with at least one target transmission channel based on the foregoing information.

In some embodiments, pairing information of all channels of the transmission channel may comprise paired audio sources of each transmission channel. The paired audio source refers to an audio source bound to a transmission channel.

In some embodiments, when there is the idle audio source among the paired audio sources, the processor may unbind the idle audio source and release a corresponding transmission channel. The idle audio source refers to an audio source not in use or not being played.

In some embodiments, when the paired audio sources do not comprise the target audio source and the quantity of available transmission channels is not less than the quantity of channels required by the target audio source, the processor may determine the target transmission channel from the available transmission channels and pair the target audio source with at least one target transmission channel. The available transmission channels refer to remaining unpaired transmission channels in the current transmission channels.

In some embodiments, when the quantity of available transmission channels is less than the quantity of channels required by the target audio source, the processor may issue a prompt to the user, such as 'current playback channels are insufficient'.

h20, pairing the target transmission channel with the target reception channel of the target playback area.

The target reception channel refers to a reception channel finally paired with the target transmission channel.

In some embodiments, the processor may pair the target transmission channel with the target reception channel of the target playback area according to a preset channel pairing rule. The preset channel pairing rule refers to a pairing rule between the target transmission channel and the target reception channel of the target playback area, which may be preset by those skilled in the art based on experience.

In some embodiments, after the target audio source is paired with the target transmission channel, the processor may obtain pairing information of all channels in a current reception channel.

Pairing information of all channels of the reception channel may comprise transmission channels paired with the reception channels. The processor may obtain available reception channels in the reception channel based on user operation, partition information of the target area (each sub-area and audio devices in the sub-area), and pairing information of all channels of the transmission channel, determine the target reception channel from the available reception channels, and then pair the target reception channel with the target transmission channel. The available reception channels refer to remaining unpaired reception channels in the current reception channels.

h30, determining the target device based on the target reception channel.

In some embodiments, the processor may use one or more audio devices corresponding to a target reception channel as the target devices.

In some embodiments, before user playback, the processor performs the operations h10-h30 to determine the adjustments required for the current playback operation and complete the audio source pairing, thereby avoiding any confusion in audio source pairing.

In addition, the user only needs to input the target audio source and an area or a device for playing the target audio source, the processor may automatically pair the target audio source with at least one transmission channel, pair the at least one transmission channel with the at least one reception channel, and pair the at least one reception channel with the at least one audio device, which satisfies the user requirement and improves user experience simultaneously.

In some embodiments, the processor may control the at least one target device to play the target audio source based on the target device and the target audio source indicated by the playback instruction.

In some embodiments, the method for implementing dynamic multi-streaming may further comprise the following operations S350-S360.

S350, determining an audio source update instruction based on the third user operation.

The third user operation refers to a physical operation performed by the user on the user terminal, which is related to the updated audio source played by the audio device. For example, the third user operation may be an operation of the user inputting a playback update requirement on the user terminal via various manners (including but not limited to text, voice, touch screen, or the like).

In some embodiments, the processor may obtain the third user operation through a terminal device of the user.

In some embodiments, the third user operation is related to a playback update requirement of the user.

In some embodiments, the playback update requirement comprises a target device group and an updated audio source for the target device group.

The updated audio source refers to another audio source different from the target audio source.

In some embodiments, the target device group may comprise a plurality of target devices. After determining the updated audio source and the target device group based on the third user operation, if an audio source is playing in the target device group, then the updated audio source may replace the originally playing audio source, so that the target device group plays the updated audio source.

In some embodiments, the plurality of target devices in the target device group may be audio devices specified by the user. For example, a plurality of audio devices in the same target device group may play various types of audio sources and any mixed audio sources thereof. For another example, during each playback, at least one audio device in the target device group may be designated to participate in the playback. For example, all audio devices may play an audio source, or only one audio device may play an audio source.

The audio source update instruction may be used for adjusting the audio source currently played by the target device group.

In some embodiments, the processor may directly determine the audio source update instruction based on the third user operation.

S360, controlling the target device group to play the updated audio source based on the audio source update instruction.

In some embodiments, the processor may send the audio source update instruction to the target device to control the target device group to play the updated audio source.

In some embodiments of the present disclosure, the user may dynamically group all audio devices in the target area based on a grouping requirement and dynamically create device grouping information including streaming media group information, so as to facilitate the user to freely select and play audio sources and/or video sources of various streaming media types. Finally, the names of the audio devices in the device grouping information displayed to the user comprise partition names, which satisfies the user requirement and improves user experience simultaneously. At the same time, the user may update the audio source played by the target device at any time, to satisfy the changing playback requirement of the user.

FIG. 4 is a flowchart illustrating an exemplary process for determining device grouping information according to some embodiments of the present disclosure. In some embodiments, the process 400 may be executed by the processor 140 or the system 200 for implementing dynamic multi-streaming. As shown in FIG. 4, the process 400 comprises the following operations S410-S440.

S410, generating one or more candidate grouping schemes based on the grouping requirement of the user.

In some embodiments, the grouping requirement of the user further comprises a content feature set and matching information corresponding to the content feature set.

In some embodiments, the content feature set comprises one or more content features.

The content feature refers to the content that the user wants to listen to. For example, if the user wants to listen to two songs, 'Nocturne' and 'Rice Field', then 'Nocturne' is a content feature, and 'Rice Field' is another content feature.

In some embodiments, each content feature corresponds to at least one optional streaming media type.

The optional streaming media type refers to a selectable streaming media type corresponding to the content feature. For example, if the song 'Nocturne' mentioned above comprises audio sources of two streaming media types, Spotify and Roon, then the optional streaming media types of 'Nocturne' are of two types, namely Spotify and Roon.

In some embodiments, the content feature set may further comprise a quantity of channels corresponding to each content feature under the respective optional streaming media type, or the like. The quantity of channels corresponding to the streaming media types may be a default value or may be preset by those skilled in the art based on experience.

The matching information corresponding to the content feature set refers to information matching playback of each content feature in the content feature set, for example, an optional streaming media type corresponding to each content feature in the content feature set.

In some embodiments, the matching information corresponding to the content feature set further comprises a target playback area of the content feature and device requirement information corresponding to the content feature.

The target playback area refers to an area where the user needs to play audio. For example, if the user needs to play audio 1 in a living room and play audio 2 in the living room and a bedroom simultaneously, then the target playback area is the living room and the bedroom.

The device requirement information refers to a required quantity of devices for different content features in different planned playback areas. For example, if the user requires 2 audio devices to play audio 1 in a living room and requires 1 audio device to play audio 2 in the living room, then the device requirement information comprises that audio 1 requires 2 audio devices in the living room and audio 2 requires 1 audio device in the living room.

For the description of how to obtain the grouping requirement of the user, please refer to the description in S310 of FIG. 3.

The candidate grouping scheme refers to a grouping scheme of audio devices in the target area as a candidate.

In some embodiments, in different candidate grouping schemes, a total quantity of streaming media groups may be different, which results in different levels of performance consumption of the system for implementing dynamic multi-streaming, thereby leading to differences in playback quality.

In some embodiments, in different candidate grouping schemes, a total quantity of streaming media may be different, that is, a total quantity of divided virtual channels may be different. Thus, interference among a plurality of content features and performance consumption of the system for implementing dynamic multi-streaming may all be different, thereby leading to differences in playback quality.

In some embodiments, in different candidate grouping schemes, a quantity of streaming media in each streaming media group may be different. Thus, different audio devices may belong to different groups, which may also lead to differences in playback quality.

In addition, the more consistent (similar) the playback quality of the plurality of audio devices in the same group, the better the playback quality. If the playback quality difference between two audio devices in the same sub-group is too large, then an audio mixing problem may occur, which may also lead to differences in playback quality among different candidate grouping schemes.

In some embodiments, the candidate grouping scheme comprises a content feature determined based on the grouping requirement and an audio device for playing the content feature.

In some embodiments, the processor may randomly generate one or more candidate grouping schemes based on the grouping requirement of the user.

In some embodiments, the processor may also determine the candidate grouping scheme via other manners. For details, please refer to the description in FIG. 5.

S420, determining the estimated playback quality of the candidate grouping scheme based on the historical playback information of the at least one audio device in the candidate grouping scheme.

The historical playback information refers to information related to a historical playback audio source. For example, the number of historical playback participations.

In some embodiments, the historical playback information of the at least one audio device comprises a signal transmission delay and a packet loss rate during historical playback.

The signal transmission delay refers to a time taken from when a processor issues the playback instruction until the audio device plays the audio source. In some embodiments, the processor may obtain the signal transmission delay via a plurality of manners, such as a Ping command, a network performance testing tool. The Ping command is a network diagnostic tool. The Ping command can send an Internet Control Message Protocol (ICMP) echo request packet to the target audio device and measure a return time of the ICMP echo request packet to determine the signal transmission delay. The network performance testing tool may include iperf, Speedtest, or the like.

The packet loss rate refers to a ratio of a quantity of lost data packets to transmitted data packets during signal transmission. In some embodiments, the processor may determine the packet loss rate via a plurality of manners, such as a Ping command, a tracert command.

The estimated playback quality refers to an estimated level of future playback quality of the audio device. In some embodiments, the estimated playback quality may be expressed as a percentage.

In some embodiments, the processor may determine the estimated playback quality of the candidate grouping scheme by using a first preset lookup table based on the historical playback information of the at least one audio device in the candidate grouping scheme. The first preset lookup table comprises a correspondence between the historical playback information of the at least one audio device in a reference grouping scheme and the estimated playback quality of the reference grouping scheme. The first preset lookup table may be constructed based on prior knowledge or historical data.

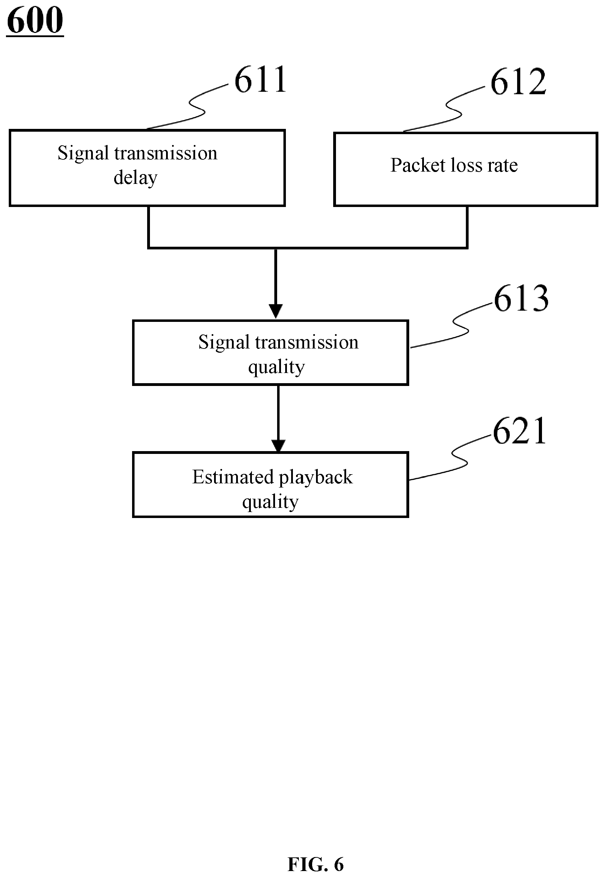

In some embodiments, the processor may also determine the estimated playback quality of the candidate grouping scheme via other manners. For details, refer to the description in FIG. 6.

S430, determining a target grouping scheme based on the estimated playback qualities of the one or more candidate grouping schemes.

The target grouping scheme refers to a finally determined grouping scheme of the audio devices in the target area.

In some embodiments, the processor may directly use the candidate grouping scheme with the highest estimated playback quality as the target grouping scheme.

In some embodiments, the processor may also sort all candidate grouping schemes in descending order based on the estimated playback qualities. Then, the processor may send a plurality of (e.g., three) top-ranked candidate grouping schemes to the terminal device of the user for the user to select. Finally, the processor may determine the candidate grouping scheme finally confirmed by the user as the target grouping scheme.

S440, determining device grouping information based on the target grouping scheme.

For the description of the device grouping information, refer to the related description in S320 of FIG. 3.

In some embodiments, the processor may determine the device grouping information corresponding to the target grouping scheme as the device grouping information.

In some embodiments, in response to a failure of the target device, the processor may also update the candidate grouping schemes and re-determine the target grouping scheme according to the aforementioned operations S410-S440.

In some embodiments, the processor may remove a faulty audio device in the target area and then re-generate one or more candidate grouping schemes for the remaining audio devices in the target area based on the grouping requirement of the user.

In some embodiments of the present disclosure, by automatically grouping the audio devices in the target area based on the user requirement, and automatically determining device grouping information, and then automatically controlling the at least one target device to play the target audio source based on the playback requirement of the user, the playback requirement of the user can be automatically and rapidly realized, and the user experience of the user can be improved.

In addition, when the at least one target device is controlled to play the target audio source according to the playback instruction generated based on the automatically determined device grouping information and the playback requirement of the user, if the target device fails suddenly, the faulty target device may be excluded, and then the device grouping information may be automatically re-determined, subsequently, based on the playback requirement of the user, the at least one target device may be automatically re-controlled to play the target audio source, so that the playback requirement of the user can be automatically and rapidly realized, and the user experience can be further improved.

It should be noted that the above description related to process 400 is merely for illustration and description and is not intended to limit the application scope of the present disclosure. For those skilled in the art, various modifications and changes may be made to the process 400 under the guidance of the present disclosure. However, these modifications and changes still fall within the scope of the present disclosure.

FIG. 5 is a flowchart illustrating an exemplary process for determining a candidate grouping scheme according to some embodiments of the present disclosure. In some embodiments, the process 500 may be executed by the processor 140 or the system 200 for implementing dynamic multi-streaming. As shown in FIG. 5, the process 500 comprises the following operations S510-S590.

S510, determining a device quantity range of at least one target device corresponding to a content feature set based on a quantity of content features in the content feature set and device requirement information corresponding to the content features. The device quantity range includes a minimum enable value and a maximum enable value of the target devices.

For the description of the content feature set, the content features, and the device requirement information, refer to the description in S410 of FIG. 4. For the description of the target device, refer to the description in S330 of FIG. 3.

In some embodiments, the processor may directly determine the device quantity range of the at least one target device corresponding to the content feature set based on the quantity of content features in the content feature set and the device requirement information corresponding to the content features. For example, if the quantity of content features in the content feature set is three, and the device requirement information corresponding to the content features indicates no requirement, then it is determined that the minimum enable value of the target devices corresponding to the content feature set is three, and the maximum enable value is a total quantity of all audio devices in the target area.

For another example, if the quantity of content features in the content feature set is three, and the device requirement information corresponding to the content features indicates that each content feature requires at least two audio devices to play together, then it is determined that the minimum enable value of the target devices corresponding to the content feature set is six, and the maximum enable value is the total quantity of all audio devices in the target area.

S520, determining the to-be-enabled quantity of the at least one target device based on the device quantity range.

The to-be-enabled quantity of the target devices refers to an actual enable value of the target devices.

In some embodiments, the processor may randomly select a value within the device quantity range as the to-be-enabled quantity of the target devices.

S530, determining one or more audio devices corresponding to the to-be-enabled quantity as one or more to-be-enabled audio devices.

In some embodiments, the processor may randomly determine one or more audio devices corresponding to the to-be-enabled quantity as one or more to-be-enabled audio devices.

The to-be-enabled audio devices refer to audio devices ready to be acitivated.

In some embodiments, the processor may directly use the determined one or more audio devices corresponding to the to-be-enabled quantity as the one or more to-be-enabled audio devices.

S540, determining a first matching relationship that satisfies a preset matching condition based on a target playback area of each of the one or more content features.

For the description of the target playback area, refer to the description in S410 of FIG. 4.

The first matching relationship refers to a matching relationship between the content feature and the at least one to-be-enabled audio device.

In some embodiments, the first matching relationship comprises a correspondence between one or more content features and one or more to-be-enabled audio devices.

In some embodiments, the processor may randomly determine a first matching relationship satisfying the preset matching condition based on the target playback area of the content feature.

The preset matching condition refers to a preset matching condition between the to-be-enabled audio devices and the content feature. In some embodiments, the preset matching condition may include that the to-be-enabled audio devices corresponding to the content feature support all streaming media types corresponding to the content feature (avoiding playback problems caused by a device not supporting a streaming media type of the content feature), and that the quantity of the to-be-enabled audio devices corresponding to the content feature is not less than a minimum enable value of the audio devices corresponding to each content feature determined based on the grouping requirement of the user, or the like.

S550, generating to-be-matched streaming media satisfying the preset quantity requirement.

The to-be-matched streaming media refers to to-be-determined streaming media corresponding to the content feature. The to-be-matched streaming media may correspond to a streaming media type. The specific streaming media type corresponding to the to-be-matched streaming media may be determined based on the target audio source. Specific descriptions are provided later.

In some embodiments, the preset quantity requirement comprises that the quantity of the to-be-matched streaming media is not less than the quantity of the content features in the content feature set, that is, it is required that each content feature corresponds to at least one to-be-matched streaming media.

In some embodiments, the processor may randomly generate to-be-matched streaming media whose quantity is greater than or equal to the quantity of the content features in the content feature set.

S560, determining a correspondence between the to-be-matched streaming media and the content features to obtain the second matching relationship.

The second matching relationship refers to a correspondence between the to-be-matched streaming media and the content features.

In some embodiments, the processor may randomly make each to-be-matched streaming media correspond to the content feature in the content feature set to obtain the second matching relationship.

S570, generating one or more streaming media groups.

The streaming media group refers to a set including one or more to-be-matched streaming media.

In some embodiments, the processor may randomly generate one or more streaming media groups. The quantity of the generated streaming media groups may be less than or equal to the quantity of the to-be-matched streaming media.

S580, determining a correspondence between the to-be-matched streaming media and the streaming media groups to obtain the third matching relationship.

The third matching relationship refers to a correspondence between the to-be-matched streaming media and the streaming media groups.

In some embodiments, the processor may randomly generate a certain quantity of streaming media groups (e.g., less than or equal to the quantity of the to-be-matched streaming media), and randomly assign each to-be-matched streaming media to one of the streaming media groups, so that each streaming media group includes at least one to-be-matched streaming media, to obtain the third matching relationship.

S590, obtaining each of one or more candidate grouping schemes based on the first matching relationship, the second matching relationship, and the third matching relationship.

For the description of the candidate grouping scheme, refer to the description in S410 of FIG. 4.

In some embodiments, since the streaming media group corresponds to the candidate grouping scheme, the processor may determine all to-be-matched streaming media in the streaming media group based on the third matching relationship. Then, the processor may determine a matching relationship between each to-be-matched streaming media and the content feature based on the second matching relationship. Subsequently, the processor may determine a matching relationship between the content feature and the to-be-enabled audio device based on the first matching relationship, thereby obtaining all to-be-enabled audio devices in each streaming media group, respectively, and further acquiring the corresponding candidate grouping scheme. For example, all to-be-enabled audio devices in the streaming media group correspond to all to-be-enabled audio devices in the device group in the candidate grouping scheme.

In some embodiments, the processor may repeatedly execute the operations S510-S590 described above to generate a plurality of candidate grouping schemes.

In some embodiments, the processor may further determine the target grouping scheme and the device grouping information based on the plurality of generated candidate grouping schemes by using the operations S420-S440 of FIG. 4.

In some embodiments, the processor may further determine the media type of the to-be-matched streaming media in the target grouping scheme based on the target audio source; and generate the playback instruction based on the target audio source and the target grouping scheme.

In some embodiments, the processor may determine a reference streaming media type corresponding to the target audio source through a second preset lookup table based on the target audio source; and determine the reference streaming media type corresponding to the target audio source as the media type of the to-be-matched streaming media corresponding to the corresponding to-be-enabled audio device in the target grouping scheme. The second preset lookup table comprises a correspondence between a reference target audio source and a reference streaming media type corresponding to the reference target audio source. The second preset lookup table may be constructed based on prior knowledge or historical data.

In some embodiments of the present disclosure, by automatically generating one or more candidate grouping schemes based on the grouping requirement of the user, the target grouping scheme is automatically determined from the candidate schemes to obtain the device grouping information. Then, the at least one target device is automatically controlled to play the target audio source based on the playback requirement of the user, thereby automatically and rapidly realizing the playback requirement of the user and improving the user experience.

FIG. 6 is a flowchart illustrating an exemplary process for determining the estimated playback quality of the candidate grouping scheme according to some embodiments of the present disclosure. In some embodiments, the process 600 may be executed by the processor 140 or the system 200 for implementing dynamic multi-streaming. As shown in FIG. 6, the process 600 comprises the following operations S610-S620.

S610, determining the signal transmission quality 613 of the audio device based on the signal transmission delay 611 and the packet loss rate 612 of the audio device during historical playback.

For descriptions of the signal transmission delay, the packet loss rate, and the signal transmission quality, refer to the description in S420 of FIG. 4.

In some embodiments, the processor may determine the signal transmission quality of the at least one audio device through the third preset lookup table based on the signal transmission delay and the packet loss rate of the audio device during historical playback. The third preset lookup table comprises a correspondence between the signal transmission delay and the packet loss rate of a reference audio device during historical playback and the signal transmission quality of the at least one reference audio device. The third preset lookup table may be constructed based on prior knowledge or historical data.

In some embodiments, for each of the at least one audio device, the processor may further determine a plurality of sub-evaluation values of the audio device based on the signal transmission delays and the packet loss rates of the audio device during a plurality of times of historical playback; and determine the signal transmission quality of the audio device based on the weighted summation of the plurality of sub-evaluation values.

The sub-evaluation value refers to an evaluation value of the signal transmission delay and the packet loss rate of the audio device during a historical playback.

In some embodiments, the processor may determine the sub-evaluation value corresponding to a historical playback based on the signal transmission delay and the packet loss rate during the historical playback according to a relationship in which the sub-evaluation value is negatively correlated to the signal transmission delay and the packet loss rate.

Merely by way of example, the processor may use a first calculation formula as follows to determine an Nth sub-evaluation value p: p = *exp*^{- (a+b)}. In the formula, 'a' denotes an average signal transmission delay of the audio device during an Nth historical playback, and 'b' denotes an average packet loss rate of the audio device during the Nth historical playback.

The average signal transmission delay and the average packet loss rate refer to an average value of the transmission delay and an average value of the packet loss rate at the plurality of preset time points within the preset acquisition time period. The preset acquisition time period and the plurality of preset time points are both historical times. The preset acquisition time period may be an entire or partial duration of a corresponding historical playback and may be preset by those skilled in the art based on experience.

In some embodiments, the processor may determine the signal transmission quality of the audio device based on the weighted summation of the plurality of sub-evaluation values.

In some embodiments, during the weighted summation of the plurality of sub-evaluation values, a weight of each sub-evaluation value is negatively correlated to the time interval between an occurrence time of the historical playback corresponding to the sub-evaluation value and the current time. For example, a weight corresponding to the Nth sub-evaluation value of the Nth historical playback is expressed by *N* = exp^{(-time interval n)}. In the formula, the time interval 'n' denotes an interval between a historical playback time (e.g., a playback end time of the audio device during the Nth historical playback) 'n' and a current time point, with a unit of hour (h).

In some embodiments, the weight N may be subjected to normalization processing. For example, a normalized weight N1 = weight N / (weight 1 + weight 2 + ... + weight N).

Merely by way of example, the processor may use a second calculation formula as follows to determine the signal transmission quality:

The signal transmission quality = the first sub-evaluation value * the first weight + the second sub-evaluation value * the second weight + ... + the Nth sub-evaluation value * the Nth weight.

In some embodiments of the present disclosure, by determining the signal transmission quality of the audio device based on a weighted summation of a plurality of sub-evaluation values, an influence of accidental factors can be avoided, and the accuracy of the finally determined signal transmission quality of the at least one audio device can be improved.

S620, determining the estimated playback quality 621 of the candidate grouping scheme based on the signal transmission quality 613 of each of the at least one audio device in the candidate grouping scheme.

For the description of the estimated playback quality, please refer to the description in S420 of FIG. 4.

In some embodiments, the processor may determine the estimated playback quality of the candidate grouping scheme via a plurality of manners. For example, the processor may determine a sum of the signal transmission quality of audio devices in the candidate grouping scheme as the estimated playback quality of the candidate grouping scheme.

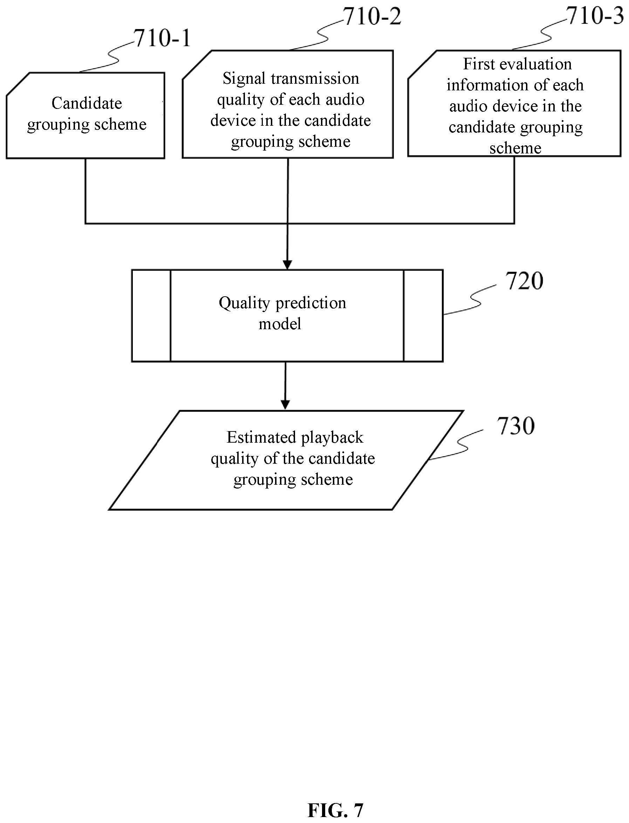

In some embodiments, the processor may also determine the estimated playback quality of the candidate grouping scheme via other manners. For details, please refer to the description in FIG. 7.

In some embodiments, in response to a failure of the target device, the processor may determine a new playback scheme based on the signal transmission qualities of the remaining audio devices and the number of channels of the target audio source, and the new playback scheme includes new target devices and playback manners.

The number of channels of the target audio source refers to the quantity of channels used for playback of the target audio source. For example, if the target audio source is a surround stereo audio source, then the number of channels of the target audio source is 6. For another example, if the target audio source is a stereo audio source, then the number of channels of the target audio source is 2.

The new playback scheme refers to another playback scheme different from a current playback scheme.

In some embodiments, the new playback scheme includes new target devices and playback manners. The new playback manner refers to another playback manner different from a current playback manner. For example, the playback of the target audio source may be switched from an original quantity of channels (e.g., 6 channels) to another quantity of channels (e.g., 2 channels) different from the original quantity of channels.

In some embodiments, in response to a failure of the target device, the processor may determine a new playback scheme based on the signal transmission qualities of the remaining audio devices and the number of channels of the target audio source.

For example, when there are 6 audio devices (audio device 1, audio device 2, ..., audio device 6) in the bedroom, the target devices are audio device 1 and audio device 2, and the target audio source is a 6-channel surround stereo audio source, the processor may select 2 audio devices from the remaining non-faulty audio devices 3, audio device 4, audio device 5, and audio device 6 in the bedroom in response to a failure of audio device 1 and/or audio device 2, wherein a preset transmission quality of the selected 2 audio devices satisfies a preset transmission quality requirement, and re-perform playback of the target audio source in a 2-channel mode.

The preset quality requirement may be that a difference between the signal transmission qualities of any two new audio devices is not higher than the signal transmission quality threshold. The signal transmission quality threshold may be preset by a person skilled in the art based on experience.

In some embodiments of the present disclosure, in response to a failure of the target device, it may determine a new playback scheme based on the signal transmission qualities of the remaining audio devices and the number of channels of the target audio source, which can avoid problems of sound mixing and incoherence caused by asymmetric sound playback due to audio device failures and ensure audio playback quality. In addition, the signal transmission quality among the newly determined audio devices during playback has a small difference, which canensure the consistency of the playback effect.

FIG. 7 is a schematic diagram illustrating another process for determining the estimated playback quality of the candidate grouping scheme according to some embodiments of the present disclosure.

In some embodiments, the processor may determine the estimated playback quality of the candidate grouping scheme through the quality prediction model 720. The quality prediction model 720 may be used to determine the estimated playback quality 730 of the candidate grouping scheme by processing the candidate grouping scheme 710-1, the signal transmission quality 710-2 of each audio device in the candidate grouping scheme, and the first evaluation information 710-3 of each audio device in the candidate grouping scheme.

In some embodiments, the first evaluation information 710-3 of each audio device in the candidate grouping scheme comprises the plurality of signal transmission delays and the plurality of packet loss rates of the audio device at a plurality of time points within the preset time period.

The preset time period may be the time period between a current time point and a preset historical time point. For example, if the current time point is 12:00 at noon, and the preset historical time point is 1:00 a.m. on the current day, then the preset time period is the time period between 1:00 a.m. and 12:00 at noon. A plurality of time points may be a plurality of time points within the preset time period. For example, within the time period between 1:00 a.m. and 12:00 at noon, starting from 1:00 a.m., a plurality of time points may be extracted every half an hour.

For the description of the candidate grouping scheme, the estimated playback quality, the signal transmission delay, and the packet loss rate, please refer to the description in FIG. 4. For the description of the signal transmission quality, please refer to the description in S610 of FIG. 6.

In some embodiments, the quality prediction model may be a machine learning model. In some embodiments, the quality prediction model may include a Neural Networks (NN) model, a Deep Neural Networks (DNN) model, or the like.

In some embodiments, the quality prediction model 720 may be obtained by training based on a plurality of training samples with labels.

In some embodiments, each set of the training samples may include a historical sample grouping scheme, the signal transmission quality of each audio device in the historical sample grouping scheme, and the first evaluation information of at least one audio device in the historical sample grouping scheme. The labels may be a historical sample candidate grouping scheme corresponding to the training samples.

In some embodiments, the historical sample grouping scheme and the first evaluation information of at least one audio device in the historical sample grouping scheme may be obtained through historical data or simulation. In some embodiments, the signal transmission quality of each audio device in the historical sample grouping scheme may be determined based on the already obtained first evaluation information of at least one audio device in the historical sample grouping scheme using the process for determining the signal transmission quality described in S610 of FIG. 6.

In some embodiments, the label is an actual playback quality of the historical sample grouping scheme. The processor may determine the actual playback quality of the historical sample grouping scheme based on a stutter frequency, a stutter duration, a distortion frequency, and a noise occurrence frequency of each audio device in the historical sample grouping scheme during historical playback. For example, when the stutter frequency, the noise occurrence frequency, or the like of an audio device during historical playback exceeds a preset frequency threshold, the label is 0; when the stutter frequency, the noise occurrence frequency, or the like of the audio device during historical playback is lower than the preset frequency threshold, the label is 1. The preset frequency threshold may be preset by a person skilled in the art based on experience.

In some embodiments of the present disclosure, by using the quality prediction model, it can achieve fast and accurate prediction of the estimated playback quality of the candidate grouping scheme to determine appropriate target devices for playing the target audio source, so as to automatically and quickly realize the playback requirement of the user, and further improve the user experience.

Basic concepts have been described above. Obviously, for a person skilled in the art, the above detailed disclosure is merely by way of example and does not constitute a limitation on the present disclosure. Although not explicitly described herein, a person skilled in the art may make various modifications, improvements, and alterations to the present disclosure. Such modifications, improvements, and alterations are suggested in the present disclosure, and thus such modifications, improvements, and alterations still fall within the spirit and scope of the exemplary embodiments of the present disclosure.

Meanwhile, the present disclosure uses specific terms to describe the embodiments of the present disclosure. For example, 'an embodiment' and/or 'some embodiments' refers to a certain feature, structure, or characteristic related to at least one embodiment of the present disclosure. Therefore, it should be emphasized and noted that 'an embodiment' or 'an alternative embodiment' mentioned two or more times in different locations in the present disclosure does not necessarily refer to the same embodiment. In addition, certain features, structures, or characteristics in one or more embodiments of the present disclosure may be suitably combined.

Furthermore, unless explicitly stated in the claims, the order of processing elements and sequences, the use of numerals and letters, or the use of other names described in the present disclosure, is not intended to limit the order of processes and manners of the present disclosure. Although some currently considered useful embodiments of the present disclosure have been discussed by way of various examples in the above disclosure, it should be understood that such details are merely for illustrative purposes. The appended claims are not limited to the disclosed embodiments. Rather, the claims are intended to cover all modifications and equivalent combinations that fall within the spirit and scope of the embodiments of the present disclosure. For example, although the above-described system components may be implemented by hardware devices, the above-described system components may also be implemented solely by software solutions, such as installing the described system on an existing server or a mobile device.

Similarly, it should be noted that, in order to simplify the description of the present disclosure and to thereby facilitate an understanding of one or more embodiments of the present disclosure, a plurality of features may sometimes be grouped into a single embodiment, a figure, or a description thereof in the foregoing description of the embodiments of the present disclosure. However, the disclosure manner does not imply that the subject matter of the present disclosure requires more features than the features recited in the claims. Indeed, the features of an embodiment may be fewer than all the features of a single embodiment as disclosed above.

In some embodiments, numbers describing quantities of components and attributes are used. It should be understood that such numbers used for the description of embodiments are modified by the terms 'about', 'approximate', or 'substantially' in some examples. Unless otherwise specified, 'about', 'approximate', or 'substantially' indicate that the numbers allow for a variation of ±20%. Accordingly, in some embodiments, the numerical parameters used in the description and the claims are all approximate values. The approximate values may vary based on the characteristics required by individual embodiments. In some embodiments, the numerical parameters should consider specified significant digits and adopt a conventional rounding method. Although the numerical ranges and parameters used to confirm their breadth of scope are approximate values in some embodiments of the present disclosure, the settings of such values are made as precise as possible within a feasible range in specific embodiments.

For each patent, patent application, patent application publication, and other materials cited in the present disclosure, such as articles, books, descriptions, publications, documents, or the like, the entirety of each of which is hereby incorporated by reference into the present disclosure. With the exception of any application history documents inconsistent with or in conflict with the content of the present disclosure, and with the exception of documents (currently or later appended to the present disclosure) that restrict the broadest scope of the claims of the present disclosure. It should be noted that if the description, definitions, and/or use of terminology in supporting materials of the present disclosure are inconsistent with or in conflict with the content described in the present disclosure, the description, definitions, and/or use of terminology of the present disclosure shall prevail.

Finally, it should be understood that the embodiments described in the present disclosure are merely for illustrating the principles of the embodiments of the present disclosure. Other variations may also fall within the scope of the present disclosure. Therefore, by way of example and not limitation, alternative configurations of the embodiments of the present disclosure may be considered consistent with the teachings of the present disclosure. Accordingly, the embodiments of the present disclosure are not limited to the embodiments explicitly presented and described in the present disclosure.

## Claims

1. A method for implementing dynamic multi-streaming, comprising:
generating a grouping instruction based on a first user operation, wherein the first user operation is related to a grouping requirement of a user;
grouping audio devices in a target area based on the grouping instruction to obtain device grouping information;
generating a playback instruction based on the device grouping information and a second user operation, wherein the second user operation is related to a playback requirement of the user, and the playback requirement comprises a target audio source; and
controlling a target device to play the target audio source based on the playback instruction.

2. The method according to claim 1, wherein the grouping audio devices in a target area based on the grouping instruction to obtain device grouping information comprises:
grouping the audio devices in the target area based on the grouping instruction to obtain first grouping information;
determining first streaming media group information based on the first grouping information;
acquiring a first adjustment instruction from the user, wherein the first adjustment instruction comprises update information of the first streaming media group information;
updating the first streaming media group information based on the first adjustment instruction to obtain second streaming media group information; and
determining the device grouping information based on the second streaming media group information.

3. The method according to claim 2, wherein the acquiring a first adjustment instruction from the user comprises:
generating full list information of the audio devices based on the first streaming media group information;
displaying the full list information to the user; and
determining the first adjustment instruction based on adjustment information of the user with respect to the full list information.

4. The method according to claim 1, wherein the grouping requirement of the user comprises a content feature set and matching information corresponding to the content feature set, and the content feature set comprises one or more content features; and
the grouping audio devices in a target area based on the grouping instruction to obtain device grouping information comprises:
generating one or more candidate grouping schemes based on the grouping requirement of the user, wherein each of the one or more candidate grouping schemes comprises a content feature and an audio device for playing the content feature;
determining an estimated playback quality of each of the one or more candidate grouping schemes based on historical playback information of the audio device in the candidate grouping scheme;
determining a target grouping scheme based on the estimated playback qualities; and
determining the device grouping information based on the target grouping scheme.

5. The method according to claim 4, wherein the matching information corresponding to the content feature set comprises a target playback area of each of the one or more content features and device requirement information corresponding to each of the one or more content features.

6. The method according to claim 5, wherein the generating one or more candidate grouping schemes based on the grouping requirement of the user comprises:
determining a device quantity range of at least one target device corresponding to the content feature set based on a quantity of the one or more content features in the content feature set and the device requirement information corresponding to each of the one or more content features;
determining a to-be-enabled quantity of the at least one target device based on the device quantity range;
determining one or more audio devices corresponding to the to-be-enabled quantity as one or more to-be-enabled audio devices;
determining a first matching relationship that satisfies a preset matching condition based on the target playback area of each of the one or more content features, wherein the first matching relationship comprises a correspondence between the one or more content features and the one or more to-be-enabled audio devices;
generating to-be-matched streaming media that satisfy a preset quantity requirement, wherein the preset quantity requirement comprises that a quantity of the to-be-matched streaming media is not less than the quantity of the one or more content features in the content feature set;
determining a correspondence between the to-be-matched streaming media and the one or more content features to obtain a second matching relationship;
generating one or more streaming media groups;
determining a correspondence between the to-be-matched streaming media and the streaming media groups to obtain a third matching relationship; and
obtaining each of the one or more candidate grouping schemes based on the first matching relationship, the second matching relationship, and the third matching relationship.

7. The method according to claim 4, wherein the historical playback information of the audio device comprises a signal transmission delay and a packet loss rate during historical playback.

8. The method according to claim 7, wherein the determining the estimated playback quality of each of the one or more candidate grouping schemes based on historical playback information of the audio device in the candidate grouping scheme comprises:
determining a signal transmission quality of the audio device based on the signal transmission delay and the packet loss rate of the audio device during the historical playback; and
determining the estimated playback quality of the candidate grouping scheme based on the signal transmission quality of the audio device in the candidate grouping scheme.

9. The method according to claim 8, wherein the determining a signal transmission quality of the audio device based on the signal transmission delay and the packet loss rate of the audio device during the historical playback comprises:
determining a plurality of sub-evaluation values of the audio device based on signal transmission delays and the packet loss rates of the audio device during a plurality of times of historical playback; and
determining the signal transmission quality of the audio device based on a weighted summation of the plurality of sub-evaluation values.

10. The method according to claim 9, wherein during the weighted summation of the plurality of sub-evaluation values, a weight of each sub-evaluation value is negatively correlated to a time interval between an occurrence time of the historical playback corresponding to the sub-evaluation value and a current time.

11. The method according to claim 8, wherein the determining the estimated playback quality of the candidate grouping scheme based on the signal transmission quality of the audio device in the candidate grouping scheme comprises:
determining the estimated playback quality of the candidate grouping scheme through a quality prediction model based on the candidate grouping scheme, the signal transmission quality of the audio device in the candidate grouping scheme, and first evaluation information of the audio device, wherein the quality prediction model is a machine learning model, and the first evaluation information comprises a plurality of signal transmission delays and a plurality of packet loss rates of the audio device at a plurality of time points within a preset time period.

12. The method according to claim 1, wherein the playback requirement further comprises a channel audio signal played by the target device.

13. The method according to claim 1, wherein the target audio source comprises a mixed audio source obtained by mixing audio sources of at least two streaming media types.

14. The method according to claim 1, further comprising:
determining an audio source update instruction based on a third user operation, wherein the third user operation is related to a playback update requirement of the user, and the playback update requirement comprises a target device group and an updated audio source for the target device group; and
controlling the target device group to play the updated audio source based on the audio source update instruction.

15. The method according to claim 1, wherein the target device is determined by a process including:
determining a user operation instruction based on at least one of the first user operation or the second user operation, wherein the user operation instruction comprises the target audio source and a target playback area; and
determining the target device by performing audio source pairing based on the user operation instruction.

16. The method according to claim 15, wherein the determining the target device by performing the audio source pairing based on the user operation instruction comprises:
pairing the target audio source with a target transmission channel;
pairing the target transmission channel with a target reception channel of the target playback area; and
determining the target device based on the target reception channel.

17. A system for implementing dynamic multi-streaming, comprising:
a grouping instruction generation module, configured to generate a grouping instruction based on a first user operation, wherein the first user operation is related to a grouping requirement of a user;
a grouping module, configured to group audio devices in a target area based on the grouping instruction to obtain device grouping information;
a playback instruction generation module, configured to generate a playback instruction based on the device grouping information and a second user operation, wherein the second user operation is related to a playback requirement of the user, and the playback requirement comprises a target audio source; and
a playback module, configured to control a target device to play the target audio source based on the playback instruction.

18. The system according to claim 17, wherein the grouping module is further configured to:
group the audio devices in the target area based on the grouping instruction to obtain first grouping information;
determine first streaming media group information based on the first grouping information;
obtain a first adjustment instruction from the user, wherein the first adjustment instruction comprises update information of the first streaming media group information;
update the first streaming media group information based on the first adjustment instruction to obtain second streaming media group information; and
determine the device grouping information based on the second streaming media group information.

19. The system according to claim 17, wherein the system further comprises an instruction update module, wherein
the instruction update module is configured to determine an audio source update instruction based on a third user operation, wherein the third user operation is related to a playback update requirement of the user, and the playback update requirement comprises a target device group and an updated audio source for the target device group; and
the playback module is further configured to control the target device group to play the updated audio source based on the audio source update instruction.

20. A non-transitory computer readable storage medium, wherein the storage medium stores computer instructions, and when a computer reads the computer instructions in the storage medium, the computer executes the method for implementing dynamic multi-streaming according to claim 1.
